# EUROPÄISCHE PATENTANMELDUNG

(11) **EP 2 302 922 A2**
(43) Veröffentlichungstag der Anmeldung: **30.03.2011**
(21) Anmeldenummer: 10171730.4
(22) Anmeldetag: 03.08.2010
(51) Int. Cl.: H04N 7/10

(54) **Universelles Elektro-Installationsgerät für Audio-/Video-Übertragung, Daten- und Telekommunikation**

(30) Priorität: 23.09.2009 DE 102009042684
(71) Anmelder: ABB AG, 68309 Mannheim (DE)
(72) Erfinder: Lehnert, Christian, 58239, Schwerte (DE)

(57) **Zusammenfassung**

Es wird ein universelles Elektro-Installationsgerät (1 - 12) für Audio-/Video-Übertragung, Daten- und Telekommunikation mit einer mechanischen Busanbindung (20) als erster Teilkomponente und einem Schnittstellenmodul (30 oder 40) als zweiter Teilkomponente vorgeschlagen,
- wobei beide Teilkomponenten (20, 30 oder 40) zueinander korrespondierend ausgebildete, interne, generische, mechanische Schnittstellen (22, 31) aufweisen,
- wobei die mechanische Busanbindung (20) einen mit ihrer generischen, mechanischen Schnittstelle (22) verbundenen Kabelanschluss (23) zum Anschluss an ein Datennetzwerk/Bussystem (50) aufweist,
- wobei das Schnittstellenmodul (30 oder 40) eine mit ihrer generischen, mechanischen Schnittstelle (31) verbundene Benutzer-/Daten-Schnittstelle (32) zum Anschluss eines Endgerätes (70 - 75) aufweist,
- so dass beliebige Schnittstellenmodule (30 oder 40) mit unterschiedlich ausgebildeten Benutzer-/Daten-Schnittstellen (32) mit der mechanischen Busanbindung (20) verbindbar sind.

## Beschreibung

Die Erfindung betrifft ein universelles Elektro-Installationsgerät für Audio-/Video-Übertragung, Daten- und Telekommunikation.

Stand der Anschlusstechnik für Audio-/Video-Übertragung, Daten- und Telekommunikationssysteme ist die Verwendung von unterschiedlichen Installationsdosen (d.h. Anschlussdosen / Anschlusseinsätzen und Zentralscheiben) für die jeweilige Daten-/Benutzerschnittstelle, z.B.
- Audio: Lautsprecherklemmen/-buchsen, Cinch/RCA, XLR, usw. oder
- Video: RGB-BNC, DVI, usw. oder Audio/Video: SCART, HDMI, usw. oder
- Daten: EIA-232 bzw. RS-232 D-Sub, Centronics, USB, RJ-45/RJ-48/RJ-49:8P2C/8P8C usw. oder
- Telefonie: TAE, ISDN RJ-11/RJ-12:6P2C/6P4C RJ-22:4P4C/4P2C RJ-49:8P8C usw.) oder
- modulare Installationsdosen (d.h. Tragringe und Zentralscheiben) für die Aufnahme von passiven Universalmodulen im Bereich der Ethernet/CAT-Verkabelung.

Die Audio-/Video-Übertragung erfordert neben den unterschiedlichen Elektro-Installationsgeräten / -dosen zusätzlich eine jeweils unterschiedliche Kabelinfrastruktur (Kabeltopologie und/oder Kabeltypen).

Die bekannten Vorrichtungen / Verfahren haben die im Folgenden beschriebenen Nachteile:
- Für die Anbindung von unterschiedlichen Datenschnittstellen sind die jeweiligen speziellen Anschlussdosen zu verwenden.
- Die Verwendung der Datenschnittstelle muss vor dem Einbau geklärt sein.
- Die Datenschnittstelle legt die Verwendung des zu installierenden Kabeltyps fest.
- Eine nachträgliche Datenschnittstellenänderung bedingt den Ausbau und (teilweisen) Austausch der Datendose.
- Eine nachträgliche Datenschnittstellenänderung ist auf Basis der bestehenden Kabelinfrastruktur in der Regel nicht möglich.
- Eine nachträgliche Datenschnittstellenänderung ist in der Regel mit der Neuverlegung von entsprechenden Kabeltypen verbunden.
- Eine universelle Verteilung der Daten/Signale unterschiedlicher Datenschnittstellen auf Basis einer Kabeltypinfrastruktur ist nicht möglich.

Der Erfindung liegt die Aufgabe zugrunde, ein optimiertes universelles Elektro-Installationsgerät für Audio-/Video-Übertragung, Daten- und Telekommunikation anzugeben.

Diese Aufgabe wird erfindungsgemäß gelöst durch ein universelles Elektro-Installationsgerät für Audio-/Video-Übertragung, Daten- und Telekommunikation mit einer mechanischen Busanbindung als erster Teilkomponente und einem Schnittstellenmodul als zweiter Teilkomponente,
- wobei beide Teilkomponenten zueinander korrespondierend ausgebildete, interne, generische, mechanische Schnittstellen aufweisen,
- wobei die mechanische Busanbindung einen mit ihrer generischen, mechanischen Schnittstelle verbundenen Kabelanschluss zum Anschluss an ein Datennetzwerk/Bussystem aufweist,
- wobei das Schnittstellenmodul eine mit ihrer generischen, mechanischen Schnittstelle verbundene Benutzer-/Daten-Schnittstelle zum Anschluss eines Endgerätes aufweist,
- so dass beliebige Schnittstellenmodule mit unterschiedlich ausgebildeten Benutzer-/Daten-Schnittstellen mit der mechanischen Busanbindung verbindbar sind.

Die mit der Erfindung erzielbaren Vorteile liegen insbesondere darin, dass die universelle und modulare Anbindung von unterschiedlichen analogen und digitalen Schnittstellen und deren Signalverteilung in einem Elektro-Installationsgerät eines Elektro-Installationssystems in Unterputz- oder Aufputz-Ausführung auf Basis einer Ethernet-Kabelinfrastruktur, d.h. einer kabelgebundenen Netztechnik mit Ethernet-Medientypen in Form von CAT-Kabeltypen oder Multifunktionskabeln ermöglicht wird. Das universelle und modulare Audio-/Video-Übertragungs-, Daten- und Telekommunikations-Elektro-Installationsgerät dient einer einfachen und leicht modifizierbaren Datenschnittstellenanschlusstechnik im Zusammenhang mit einer Kabeltypinfrastruktur, die für unterschiedliche Datenschnittstellen geeignet ist und als Standard der Installationstechnik in der IT gilt. Der wirtschaftliche Nutzen besteht in der einfachen Handhabung, der Modularität und damit der universellen Nutzung durch den Installateur und Endkunden und flexiblen Nutzung einer Ethernet/CAT-Kabeltypinfrastruktur.

Dabei sind folgende Definitionen wichtig:
- Unter dem Begriff "Benutzer-/Daten-Schnittstelle" respektive "Datenschnittstelle" oder "Benutzerschnittstelle" wird die für den Benutzer zugängliche Schnittstelle in den unterschiedlichen oben aufgeführten Ausführungen des Elektro-Installationsgeräts verstanden.
- Unter dem Begriff "Elektro-Installationssystem" wird das Gebiet der Installationstechnik für den Wohn- und Zweckbau verstanden.
- Unter dem Begriff "Audio-/Video-Übertragung, Daten- und Telekommunikation" wird das Gebiet der analogen und digitalen Signalübertragung
   - im Audio- und Videobereich, z.B. Mono-/Stereo- oder Multikanal Signale von HiFi- und A/V-Geräten und Verstärkern, DVI, HDMI, usw.,
   - in der Datenkommunikation, beispielsweise analoge und digitale, serielle und parallele Informationsübertragungen wie z.B. EIA-232, USB, Centronics, IP, usw. oder
   - in der Telekommunikation, z.B. analoger Telefondienst, digitaler Telefondienst ISDN, usw. verstanden.

Zweckmäßige Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- **Fig. 1**: ein universelles, passives Elektro-Installationsgerät für Audio-/Video- Übertragung, Daten- und Telekommunikation eines Datenkommunika- tionssystems,
- **Fig. 2**: ein universelles, aktives Elektro-Installationsgerät für Audio-/Video- Übertragung, Daten- und Telekommunikation eines Datenkommunika- tionssystems,
- **Fig. 3**: eine Punkt-zu-Punkt-Verbindung des Datenkommunikationssystems mit zwei passiven Elektro-Installationsgeräten,
- **Fig. 4**: eine Punkt-zu-Punkt-Verbindung des Datenkommunikationssystems mit einem passiven und einem aktiven Elektro-Installationsgerät,
- **Fig. 5**: ein Beispiel eines passives Elektro-Installationsgeräts gemäß einer ersten Variante,
- **Fig. 6**: ein Beispiel eines passives Elektro-Installationsgeräts gemäß einer zweiten Variante,
- **Fig. 7 - 16**: Kombinationen von Punkt-zu-Punkt-Verbindungen in Form von Kaska- den,
- **Fig. 17**: eine 1-zu-N-Verbindung mehrerer passiver Elektro-Installationsgeräte,
- **Fig. 18**: eine Matrix-Verbindung mehrerer Elektro-Installationsgeräte,
- **Fig. 19**: eine Matrix-Verbindung mehrerer aktiver Elektro-Installationsgeräte unter Einsatz einer aktiven Matrix gemäß einem ersten Beispiel,
- **Fig. 20**: eine Matrix-Verbindung mehrerer aktiver Elektro-Installationsgeräte unter Einsatz einer aktiven Matrix gemäß einem zweiten Beispiel.

Das vorgeschlagene universelle Elektro-Installationsgerät für Audio-/Video-Übertragung, Daten- und Telekommunikation lässt sich prinzipiell in zwei Arten unterteilen:
- universelles, passives Elektro-Installationsgerät (siehe die Ziffern 1 - 6 in den nachfolgenden Figuren),
- universelles, aktives Elektro-Installationsgerät (siehe die Ziffern 7 - 12 in den nachfolgenden Figuren).

Ein universelles, passives Elektro-Installationsgerät zeichnet sich dadurch aus, dass es keine aktiven Bauelemente beinhaltet. Ein universelles, aktives Elektro-Installationsgerät benutzt aktive Bauelemente zur Signal-/Medienkonvertierung zwischen Datennetzwerk-/Bussystem-Anbindung und Benutzer-/Daten-Schnittstelle.

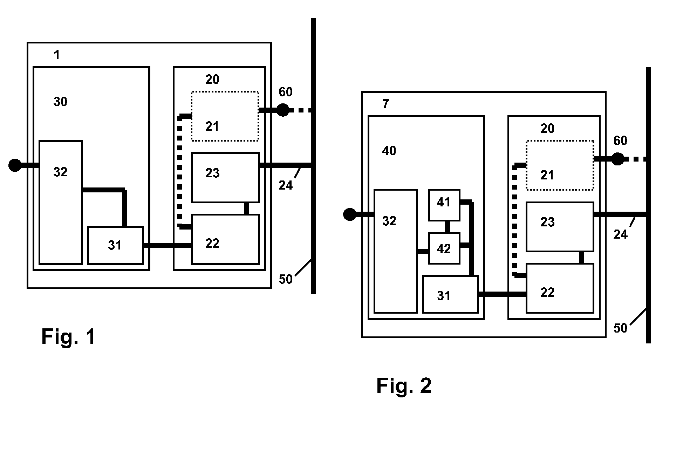

In **Fig. 1** ist ein universelles, passives Elektro-Installationsgerät eines Datenkommunikationssystems für Audio-/Video-Übertragung, Daten- und Telekommunikation dargestellt. Ein universelles, passives Elektro-Installationsgerät 1 (sowie 2, 3, 4, 5, 6 gemäß den weiteren Figuren) für Audio-/Video-Übertragung, Daten- und Telekommunikation besteht aus den folgenden Teilkomponenten:
- Eine mechanische Busanbindung 20 als erste Teilkomponente: Sie bildet vorzugsweise über einen CAT-Kabelanschluss 23, insbesondere CAT-Duplexkabelanschluss, und mindestens einem Twisted-Pair-Kabel 24, vorzugsweise einem Twisted-Pair-Duplexkabel die Anschlussverbindung zu einem Datennetzwerk/Bussystem 50 respektive einer Bussysteminfrastruktur (z.B. durch Schraub-, Löt- oder Quetschverbindungen beispielsweise in LSA Technik, usw.) und optional zusätzlich zu einem externen Spannungsanschluss 21 für den Anschluss einer externen Spannungsversorgung 60 auf der einen Seite und stellt auf der anderen Seite eine geräteinterne, generische, mechanische Schnittstelle 22 für die Aufnahme respektive den Anschluss eines Schnittstellenmoduls zur Verfügung, wobei verschiedenartige Schnittstellenmodule zur Verfügung stehen.
- Ein passives Schnittstellenmodul 30 als zweite Teilkomponente des universellen, passiven Elektro-Installationsgerätes: Es bildet die Anschlussverbindung zwischen einer Benutzer-/Datenschnittstelle 32 respektive Front-Schnittstellen-Stecker/-Buchse (z.B. Lautsprecherklemmen/-buchsen, Cinch/RCA, XLR, RGB-BNC, DVI, SCART, HDMI, EIA-232 bzw. RS-232 D-Sub, Centronics, USB, TAE, ISDN, RJ-Verbindungen, usw.) auf der einen Seite und stellt eine geräteinterne, generische, mechanische Schnittstelle 31 zur Kontaktierung mit der internen generischen, mechanischen Schnittstelle 22 der mechanischen Busanbindung 20 auf der anderen Seite zur Verfügung. Das passive Schnittstellenmodul 30 zeichnet sich dadurch aus, dass es keine aktiven Bauteile/Komponenten besitzt und somit keine zusätzliche(n) Versorgungsspannung(en) (z.B. PoE - Power over Ethernet, PoL - Power over LAN oder über den externen Spannungsversorgungsanschluss 21) benötigt bzw. verwendet (falls eine externe Spannungsversorgung 60 angeschlossen sein sollte).

Diese beiden Teilkomponenten 20, 30 sind jeweils als eine Einheit oder in Form weiterer, vorstehend bereits erwähnter Teilkomponenten realisiert. Die logischen oder physikalischen Teilkomponenten sind:
- Der CAT-Kabelanschluss 23, vorzugsweise CAT-Duplex-Kabelanschluss: Er stellt die physikalische Verbindung zum Datennetzwerk respektive der Bussysteminfrastruktur in Form eines Kabelanschlussterminals zur Verfügung (z.B. für CAT-Kabel mit 2x4 Adern/paarweise verdrillt oder für CAT-DuplexKabel mit 2x2x4 Adern/paarweise verdrillt oder für entsprechende Multifunktionskabel, die z.B. noch zusätzliche Steuer- und/oder Spannungsadern und/oder eine höhere Güte (erweiterter Frequenzbereich) als derzeitige CAT-Kabel aufweisen jeweils mit und ohne Gesamt- und/oder Adernpaarschirmung).
- Die internen, generischen, mechanischen Schnittstellen 22, 31: Diese stellen die Schnittstellen zur Anbindung verschiedenartiger passiver und aktiver Schnittstellenmodule zur Verfügung. Aufgrund der generischen Ausgestaltung können die verschiedenartigen Schnittstellenmodule beliebig ausgetauscht werden, ohne dabei die physikalische Verbindung des CAT-Kabelanschlusses 23 lösen zu müssen bzw. das Elektro-Installationsgerät ausbauen zu müssen.
- Die Benutzer-/Daten-Schnittstellen 32 respektive Front-Schnittstelle: Diese stellen die physikalische Verbindung der Datenschnittstelle, z.B. in Form eines oder mehrerer Bananenstecker/Lautsprecherklemmen, XLR- oder Cinch/RCA-Buchse(n) oder -Stecker für Audiokomponenten, DVI- oder HDMI-Buchse(n) oder -Stecker für Audio-/Video-Komponenten oder D-Sub, SCART, USB, RJ-Verbindungen für Datenübertragung, ISDN und Ethernet, usw. zur Verfügung.
- Optional der externe Spannungsanschluss 21: Er bildet die Anschlussverbindung zu einer externen, alternativen Spannungsversorgung 60 für das Elektro-Installationsgerät. Das universelle, passive Elektro-Installationsgerät macht keinen internen Gebrauch von diesem Anschluss. Dieser Spannungsanschluss ist zur Gleichhaltung der mechanischen Busanbindungskomponente für passives und aktives Elektro-Installationsgerät anzusehen und ermöglicht somit den beliebigen Austausch von passiven und aktiven Schnittstellenmodulen am gleichen Elektro-Installationsgerät. Es handelt sich generell um eine optionale Schnittstelle, da sie eine alternative Spannungsversorgung bietet, z.B. für den Fall, dass kein PoE oder PoL für aktive Schnittstellenmodule zur Verfügung steht. Grundsätzlich sind jedoch sowohl passive als auch aktive Elektro-Installationsgeräte ohne diese externe Spannungsanschlussschnittstelle realisierbar (beispielsweise indem die Spannungsversorgung mittels PoE oder PoL erfolgt).

In **Fig. 2** ist ein universelles, aktives Elektro-Installationsgerät für Audio-/Video-Übertragung, Daten- und Telekommunikation eines Datenkommunikationssystems dargestellt. Ein universelles, aktives Elektro-Installationsgerät 7 (sowie 8, 9, 10, 11, 12 gemäß den weiteren Figuren) für Audio-/Video-Übertragung, Daten- und Telekommunikation besteht dabei aus den folgenden Teilkomponenten:
- Eine mechanische Busanbindung 20 als erste Teilkomponente, welche identisch zum passiven Elektro-Installationsgerät 1 ausgebildet ist.
- Ein aktives Schnittstellenmodul 40 als zweite Teilkomponente: Es bildet die Anschlussverbindung zwischen der Benutzer-/Datenschnittstelle 32, z.B. Lautsprecherklemmen/-buchsen, Cinch/RCA, XLR, RGB-BNC, DVI, SCART, HDMI, EIA-232 bzw. RS-232 D-Sub, Centronics, USB, TAE, ISDN, RJ-Verbindungen, usw. auf der einen Seite und stellt zur Kontaktierung mit der mechanischen Busanbindung 20 die interne, generische, mechanische Schnittstelle 31 auf der anderen Seite. Das aktive Schnittstellenmodul 40 ist identisch zum Schnittstellenmodul 30 des passiven Elektro-Installationsgerätes ausgebildet, mit der wesentlichen Ausnahme, dass hier aktive Bauteile / Komponenten zur Signalkonvertierung und/oder Signal-/Bussteuerung in Form eines Medienkonverters 42 zum Einsatz kommen, welche mit der Benutzer-/Daten-Schnittstelle 32 verbunden sind und die über eine Spannungsversorgung gegebenenfalls unter Einsatz eines Netzteils 41 betrieben werden.

Die beiden Teilkomponenten 20, 40 sind jeweils als eine Einheit oder in Form weiterer, vorstehend bereits erwähnter Teilkomponenten realisiert. Die logischen oder physikalischen Teilkomponenten sind:
- Der CAT-Kabelanschluss 23, insbesondere CAT-Duplex-Kabelanschluss, welcher identisch zum passiven Elektro-Installationsgerät ausgebildet ist.
- Die internen, generischen, mechanischen Schnittstellen 22, 31, welche identisch zum passiven Elektro-Installationsgerät ausgebildet sind.
- Die Benutzer-/Daten-Schnittstelle 32 respektive Front-Schnittstelle, welche identisch zum passiven Elektro-Installationsgerät ausgebildet ist.
- Der optionale, externe Spannungsanschluss 21, welcher die Anschlussverbindung zu einer alternativen, externen Spannungsversorgung 60 bildet. Es handelt sich um eine optionale Schnittstelle, da sie eine alternative Spannungsversorgung bietet, z.B. für den Fall, dass kein PoE zur Verfügung steht. In diesem Fall kann eine externe Spannung direkt oder über zusätzliche Leitungen oder Adern eines Multifunktionskabels des Bussystems zugefügt werden. Grundsätzlich sind passive und aktive Elektro-Installationsgeräte ohne diese externe Spannungsanschlussschnittstelle realisierbar, z.B. mittels PoE - Power over Ethernet oder PoL - Power over LAN.
- Das Netzteil 41 für die interne Spannungsversorgung, entweder über den optionalen externen Spannungsanschluss 21 (z.B. 230/120 Volt Wechselspannungsnetz, Klein-/SELV-Spannung, usw.) oder über das Twisted-Pair-(Duplex)Kabel 24 des Datennetzwerks/Bussystems 50 (z.B. PoE = Power over Ethernet).

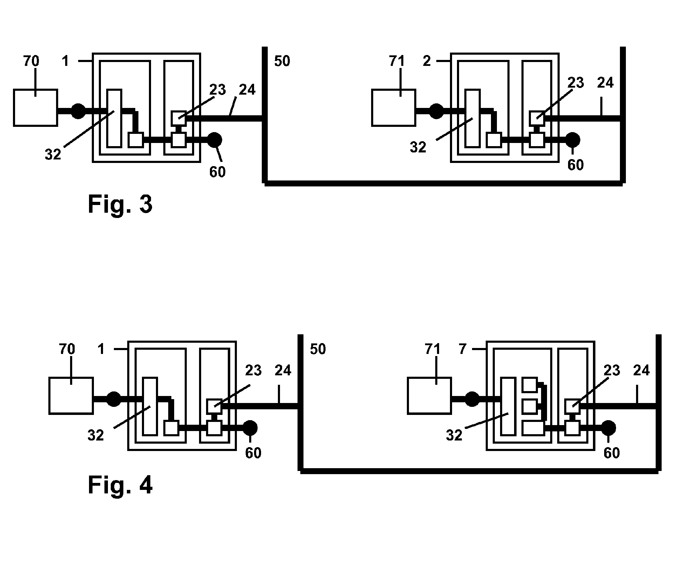

Die einfachste Verbindungsform zweier Endgeräte ist die Punkt-zu-Punkt-Verbindung ohne Zwischenschaltung aktiver Komponenten. Hierbei können eine oder mehrere Punkt-zu-Punkt-Verbindungen parallel aufgebaut werden. In Fig. 3 ist hierzu eine Punkt-zu-Punkt-Verbindung des Datenkommunikationssystems mit zwei passiven Elektro-Installationsgeräten dargestellt. Es sind zwei universelle, passive Elektro-Installationsgeräte 1, 2 zu erkennen, wobei ein Endgerät 70 an die Benutzer-/Daten-Schnittstelle 32 des Elektro-Installationsgerätes 1 angeschlossen ist sowie ein Endgerät 71 mit der Benutzer-/Daten-Schnittstelle 32 des Elektro-Installationsgerätes 2 verbunden ist. Beide Elektro-Installationsgeräte 1, 2 sind über ihre CAT-Kabelanschlüsse 23, Twisted-Pair-(Duplex)Kabel 24 und das Datennetzwerk/Bussystem 50 miteinander verbunden.

Am Beispiel eines HiFi-Systems soll die Nutzung für eine Punkt-zu-Punkt-Verbindung erklärt werden: Endgerät 70 stellt beispielsweise einen HiFi-Receiver und Endgerät 71 beispielsweise die Lautsprecher dar. In diesem Fall wird der HiFi-Receiver (bestehend aus Radio + Stereo-Vorverstärker + Stereo-Endstufe) am Elektro-Installationsgerät 1 mit einem passiven Schnittstellenmodul 30 mit Lautsprecherklemmen angeschlossen. Die Lautsprecher werden mit einem passiven Schnittstellenmodul 30 mit Lautsprecherklemmen am Elektro-Installationsgerät 2 angeschlossen.

Eine Neupositionierung von HiFi-Receiver (respektive Endgerät 70) und/oder Lautsprecher (respektive Endgerät 71) kann auf diese Weise ohne umständliche neue Kabelverlegung zwischen den Komponenten erfolgen, und zwar an jede Position, in der sich ein Elektro-Installationsgerät befindet. Die Verbindung zwischen Endgerät 70 (HiFi-Receiver) zum Elektro-Installationsgerät 1 und Endgerät 71 (Lautsprecher) zum Elektro-Installationsgerät 2 erfolgt mittels üblicher Verkabelung (z.B. Lautsprecherkabel). Größere Raumdistanzen lassen sich damit ohne eine neue Verlegung von störenden (Lautsprecher-) Kabeln im Raum überwinden.

Das passive Schnittstellenmodul mit Lautsprecherklemmen ist so ausgelegt, dass es das Stereo-Ausgangssignal des HiFi-Receivers (respektive der Stereo-Endstufe) auf mehrere Adern des Kabelnetzwerks respektive des Datennetzwerks/Bussystems 50 verteilt, um die Signale und Leistung durch das Netzwerk zu führen.

Die Möglichkeit der Verwendung von unterschiedlichen (passiven als auch aktiven) Schnittstellenmodulen ist ebenfalls gegeben. In **Fig. 4** ist eine Punkt-zu-Punkt-Verbindung des Datenkommunikationssystems mit einem passiven und einem aktiven Elektro-Installationsgerät dargestellt. Es sind ein universelles, passives Elektro-Installationsgerät 1 und ein universelles, aktives Elektro-Installationsgerät 7 zu erkennen, wobei ein Endgerät 70 an die Benutzer-/Daten-Schnittstelle 32 des Elektro-Installationsgerätes 1 angeschlossen ist sowie ein Endgerät 71 mit der Benutzer-/Daten-Schnittstelle 32 des Elektro-Installationsgerätes 7 verbunden ist. Beide Elektro-Installationsgeräte 1, 7 sind über ihre CAT-Kabelanschlüsse 23, Twisted-Pair-Kabel 24 und das Datennetzwerk/Bussystem 50 miteinander verbunden.

Beispielsweise kann mit der Konfiguration gemäß **Fig. 4** ein HiFi-System, bestehend aus Stereo-Vorverstärker respektive Endgerät 70 und Lautsprechern respektive Endgerät 71 - ohne Stereo-Endstufe - gebildet werden. Die erforderliche Stereo-Endstufe wird dabei durch ein aktives Schnittstellenmodul des Elektro-Installationsgerätes 7 integriert. In diesem Fall wird der Stereo-Vorverstärker respektive Endgerät 70 am Elektro-Installationsgerät 1 mit einem passiven Schnittstellenmodul mit z.B. Cinch/RCA-Buchsen oder XLR-Steckern angeschlossen. Die Lautsprecher respektive Endgerät 71 werden mit einem aktiven Schnittstellenmodul mit Lautsprecherklemmen am Elektro-Installationsgerät 2 angeschlossen. Das aktive Schnittstellenmodul mit Lautsprecherklemmen ist so ausgelegt, dass es das vom Elektro-Installationsgerät 1 auf das Kabelnetzwerk respektive Datennetzwerk/Bussystem 50 eingespeiste Stereo-Ausgangssignal des Stereo-Vorverstärkers über das Elektro-Installationsgerät 2 aufnimmt, die Stereo-Signalspannungen im aktiven Schnittstellenmodul verstärkt und an den Lautsprecherklemmen des Schnittstellenmoduls für die Lautsprecher zur Verfügung stellt. Diese Lösung kommt ohne zusätzliche Versorgungsspannungen aus, da PoE oder PoL genutzt werden kann. Optional ist die externe Einspeisung einer Versorgungsspannung (siehe Spannungsversorgung 60) am Elektro-Installationsgerät 2 gegeben, z.B. auch für den Fall einer höheren Endstufenleistung.

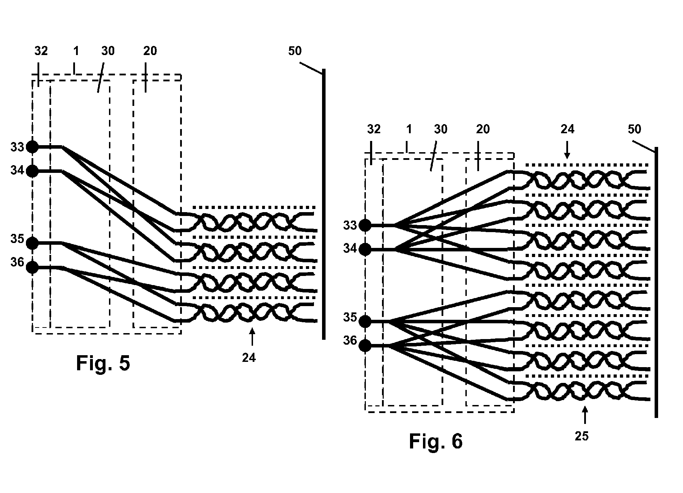

In den **Figuren 5 und 6** sind zwei Varianten (Ausführungsbeispiele) eines passiven Elektro-Installationsgerätes 1 gezeigt. Dabei wird bei beiden Varianten die Benutzer-/Daten-Schnittstelle 32 gebildet durch
- eine positive Lautsprecher-Polklemme 33 des linken Kanals,
- eine negative Lautsprecher-Polklemme 34 des linken Kanals,
- eine positive Lautsprecher-Polklemme 35 des rechten Kanals,
- eine negative Lautsprecher-Polklemme 36 des rechten Kanals.

In **Fig. 5** ist ein Beispiel eines passiven Elektro-Installationsgeräts gemäß einer ersten Variante dargestellt. Bei dieser ersten Variante wird ein Twisted-Pair-Kabel 24 mit 2x4 Adern verwendet, so dass jeweils zwei Adern für positive und jeweils zwei Adern für negative Signale eines Kanals zur Verfügung stehen, die jeweils einzeln verdrillt sind (mit oder ohne Gesamt-/Aderpaarschirmung).

In **Fig. 6** ist ein Beispiel eines passiven Elektro-Installationsgeräts gemäß einer zweiten Variante dargestellt. Bei dieser zweiten für höhere Leistung geeigneten Variante wird ein Twisted-Pair-Duplexkabel mit 2x2x4 Adern entsprechend zwei Twisted-Pair-Kabeln 24, 25 verwendet, so dass jeweils vier Adern für positive und jeweils vier Adern für negative Signale eines Kanals zur Verfügung stehen, die jeweils einzeln verdrillt sind (mit oder ohne Gesamt-/Aderpaarschirmung).

Bei der in **Fig. 3** gezeigten Punkt-zu-Punkt-Verbindung des Datenkommunikationssystems mit zwei passiven Elektro-Installationsgeräten 1, 2 ergibt sich durch Austausch des passiven Schnittstellenmoduls beispielsweise folgende weitere Möglichkeit:

Endgerät 70 stellt den Stereo-Vorverstärker und Endgerät 71 die Stereo-Endstufe eines HiFi-Systems dar. In diesem Fall wird der Stereo-Vorverstärker respektive Endgerät 70 am Elektro-Installationsgerät 1 mit einem passiven Schnittstellenmodul mit z.B. Cinch/RCA-Buchsen oder XLR-Steckern angeschlossen. Die Stereo-Endstufe respektive Endgerät 71 wird mit einem passiven Schnittstellenmodul mit z.B. Cinch/RCA-Buchsen oder XLR-Buchsen am Elektro-Installationsgerät 2 angeschlossen. Das passive Schnittstellenmodul mit Cinch/RCA- oder XLR-Buchsen/Steckern ist so ausgelegt, dass es das Stereo-Ausgangssignal des Stereo-Vorverstärkers respektive Endgeräts 70 auf mehrere Adern des Kabelnetzwerks respektive Datennetzwerks/Bussystems 50 verteilt, um die (Kleinspannungs-) Signale durch das Netzwerk zu führen (z.B. bei einem Kabel 2x4 Adern jeweils zwei Adern für positive und zwei Adern für negative Signale eines Kanals die jeweils einzeln verdrillt sind - siehe erste Variante gemäß **Fig. 5** oder bei 2x2x4 Adern (Duplexkabel) vier Adern für positive und vier Adern für negative Signale eines Kanals die jeweils einzeln verdrillt sind - siehe zweite Variante gemäß **Fig. 6** **-** für niedrigere Verluste - optional kann eine Gesamt- und/oder Aderpaarschirmung des Netzwerkkabels genutzt werden, um äußere Störeinflüsse zu minimieren).

Es besteht die Möglichkeit, beliebige Punkt-zu-Punkt-Verbindungen miteinander zu kombinieren, wie beispielsweise Stereo-Vorverstärker respektive Endgerät 70 - Elektro-Installationsgerät 1 - Elektro-Installationsgerät 2 - Stereo-Endstufe respektive Endgerät 71 mit Stereo-Endstufe respektive Endgerät 71 - Elektro-Installationsgerät 1 - Elektro-Installationsgerät 2 - Lautsprecher respektive Endgerät 72 in Kaskade, um eine noch größere Flexibilität zu erreichen.

Beliebige andere Konstellation mit anderen Endgeräten lassen sich auf die gleiche Art und Weise realisieren, d. h. in den vorstehend behandelten Beispielen dient das HiFi-System lediglich zur Veranschaulichung.

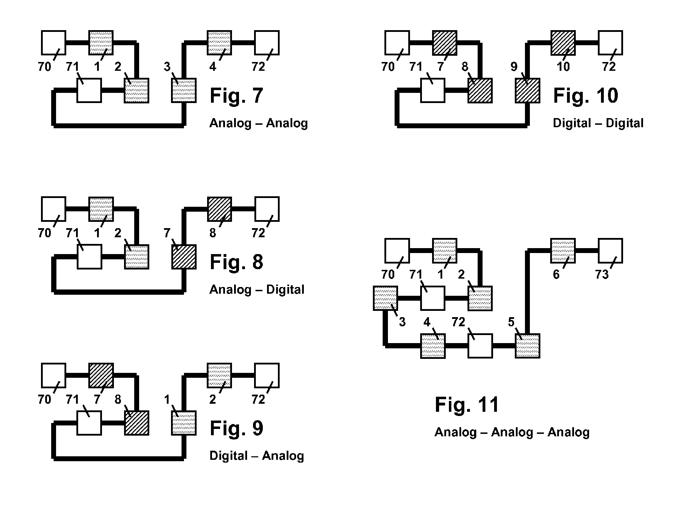

In den **Fig. 7 - 16** sind Kombinationen von Punkt-zu-Punkt-Verbindungen in Form von Kaskaden dargestellt, und zwar
- in **Fig. 7** eine Analog - Analog - Kaskade mit folgender Konfiguration: Endgerät 70 - passives Elektro-Installationsgerät 1 - passives Elektro-Installationsgerät 2 - Endgerät 71 - passives Elektro-Installationsgerät 3 - passives Elektro-Installationsgerät 4 - Endgerät 72,
- in Fig. 8 eine Analog - Digital - Kaskade mit folgender Konfiguration: Endgerät 70 - passives Elektro-Installationsgerät 1 - passives Elektro-Installationsgerät 2 - Endgerät 71 - aktives Elektro-Installationsgerät 7 - aktives Elektro-Installationsgerät 8 - Endgerät 72,
- in **Fig. 9** eine Digital - Analog - Kaskade mit folgender Konfiguration: Endgerät 70 - aktives Elektro-Installationsgerät 7 - aktives Elektro-Installationsgerät 8 - Endgerät 71 - passives Elektro-Installationsgerät 1 - passives Elektro-Installationsgerät 2 - Endgerät 72,
- in **Fig. 10** eine Digital - Digital - Kaskade mit folgender Konfiguration: Endgerät 70 - aktives Elektro-Installationsgerät 7 - aktives Elektro-Installationsgerät 8 - Endgerät 71 - aktives Elektro-Installationsgerät 9 - aktives Elektro-Installationsgerät 10 - Endgerät 72,
- in **Fig. 11** eine Analog - Analog - Analog -Kaskade mit folgender Konfiguration: Endgerät 70 - passives Elektro-Installationsgerät 1 - passives Elektro-Installationsgerät 2 - Endgerät 71 - passives Elektro-Installationsgerät 3 - passives Elektro-Installationsgerät 4 - Endgerät 72 - passives Elektro-Installationsgerät 5 - passives Elektro-Installationsgerät 6 - Endgerät 73,

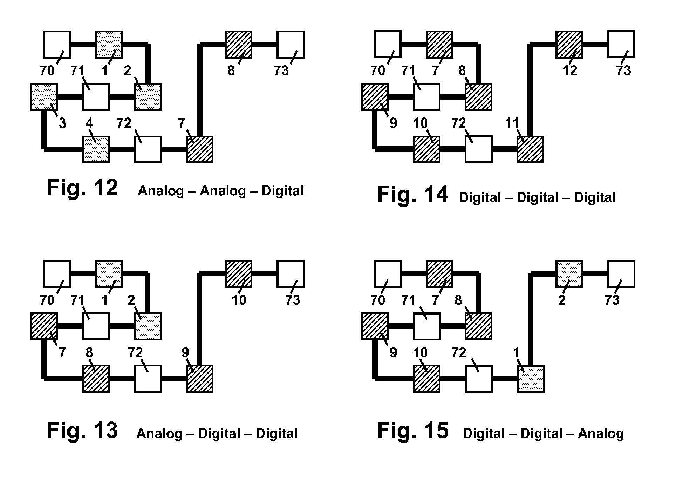

- in **Fig. 12** eine Analog - Analog - Digital - Kaskade mit folgender Konfiguration: Endgerät 70 - passives Elektro-Installationsgerät 1 - passives Elektro-Installationsgerät 2 - Endgerät 71 - passives Elektro-Installationsgerät 3 - passives Elektro-Installationsgerät 4 - Endgerät 72 - aktives Elektro-Installationsgerät 7 - aktives Elektro-Installationsgerät 8 - Endgerät 73,
- in **Fig. 13** eine Analog - Digital - Digital - Kaskade mit folgender Konfiguration: Endgerät 70 - passives Elektro-Installationsgerät 1 - passives Elektro-Installationsgerät 2 - Endgerät 71 - aktives Elektro-Installationsgerät 7 - aktives Elektro-Installationsgerät 8 - Endgerät 72 - aktives Elektro-Installationsgerät 9 - aktives Elektro-Installationsgerät 10 - Endgerät 73,
- in **Fig. 14** eine Digital - Digital -Digital - Kaskade mit folgender Konfiguration: Endgerät 70 - aktives Elektro-Installationsgerät 7 - aktives Elektro-Installationsgerät 8 - Endgerät 71 - aktives Elektro-Installationsgerät 9 - aktives Elektro-Installationsgerät 10 - Endgerät 72 - aktives Elektro-Installationsgerät 11 - aktives Elektro-Installationsgerät 12 - Endgerät 73,
- in **Fig. 15** eine Digital - Digital -Analog - Kaskade mit folgender Konfiguration: Endgerät 70 - aktives Elektro-Installationsgerät 7 - aktives Elektro-Installationsgerät 8 - Endgerät 71 - aktives Elektro-Installationsgerät 9 - aktives Elektro-Installationsgerät 10 - Endgerät 72 - passives Elektro-Installationsgerät 1 - passives Elektro-Installationsgerät 2 - Endgerät 73,

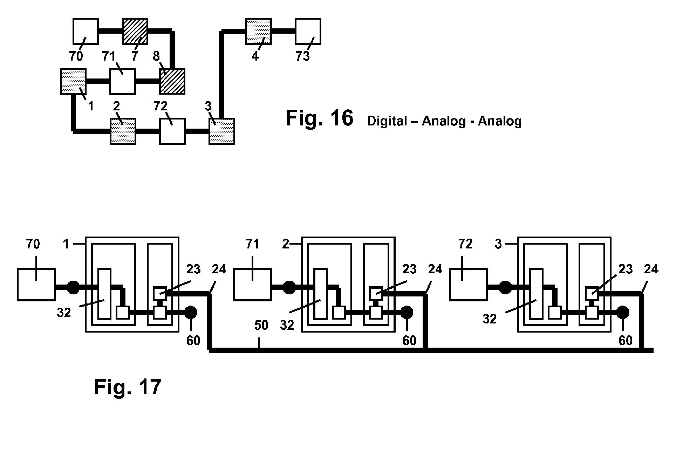

- in **Fig. 16** eine Digital - Analog - Analog - Kaskade mit folgender Konfiguration: Endgerät 70 - aktives Elektro-Installationsgerät 7 - aktives Elektro-Installationsgerät 8 - Endgerät 71 - passives Elektro-Installationsgerät 1 - passives Elektro-Installationsgerät 2 - Endgerät 72 - passives Elektro-Installationsgerät 3 - passives Elektro-Installationsgerät 4 - Endgerät 73.

In **Fig. 17** ist eine 1-zu-N-Verbindung (Punkt-zu-Multipunkt) mehrerer passiver Elektro-Installationsgeräte dargestellt. Es sind drei universelle, passive Elektro-Installationsgeräte 1, 2, 3 zu erkennen, wobei ein Endgerät 70 an die Benutzer-/Daten-Schnittstelle 32 des Elektro-Installationsgerätes 1 angeschlossen ist, ein Endgerät 71 an die Benutzer-/Daten-Schnittstelle 32 des Elektro-Installationsgerätes 2 angeschlossen ist sowie ein Endgerät 72 mit der Benutzer-/Daten-Schnittstelle 32 des Elektro-Installationsgerätes 3 verbunden ist. Alle Elektro-Installationsgeräte 1, 2, 3 sind über ihre CAT-Kabelanschlüsse 23, Twisted-Pair-(Duplex)Kabel 24 und das Datennetzwerk/Bussystem 50 miteinander verbunden.

Endgerät 70 stellt beispielsweise den HiFi-Receiver, Endgerät 71 den Lautsprecher für den linken Kanal und Endgerät 72 den Lautsprecher für den rechten Kanal dar. In diesem Fall wird der HiFi-Receiver respektive Endgerät 70 (bestehend aus Radio + Stereo-Vorverstärker + Stereo-Endstufe) am Elektro-Installationsgerät 1 mit einem passiven Schnittstellenmodul mit Lautsprecherklemmen angeschlossen. Die Lautsprecher respektive Endgeräte 71 und 72 werden mit jeweils einem passiven Schnittstellenmodul mit Lautsprecherklemmen am Elektro-Installationsgerät 2 und 3 angeschlossen. Damit lassen sich die beiden Lautsprecher beliebig voneinander positionieren, ohne störende (Lautsprecher-) Kabel zwischen dem Endgerät 70 und den Endgeräten 71 und 72 verlegen zu müssen. Eine Neuanordnung der Lautsprecher ist gegeben, beispielsweise indem der Abstand zwischen den beiden Lautsprechern vergrößert wird. Dabei werden störende Lautsprecherkabel von Elektro-Installationsgerät zum jeweiligen Lautsprecher für linken und rechten Kanal weitgehend vermieden.

Beliebige andere Konstellation mit anderen Endgeräten lassen sich auf die gleiche Art und Weise realisieren.

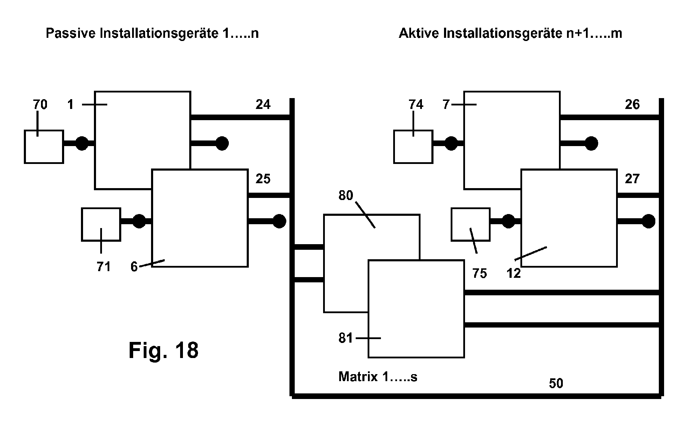

Eine komplexere Verbindungsform zweier oder mehr Endgeräte ist die N-zu-M-Verbindung (Kreuz, Matrix, Multipunkt-zu-Multipunkt) mit passiven oder aktiven Matrix-Komponenten. Hierbei können beliebige Punkt-zu-Punkt-, 1-zu-N- und N-zu-M-Verbindungen hergestellt werden. In **Fig. 18** ist hierzu eine derartige Matrix-Verbindung mehrerer Elektro-Installationsgeräte dargestellt. Es sind schematisch zwei passive Elektro-Installationsgeräte 1 bzw. 6 mit daran angeschlossenen Endgeräten 70 bzw. 71 skizziert, wobei das passive Elektro-Installationsgerät 1 das erste passive Elektro-Installationsgerät und das passive Elektro-Installationsgerät 6 das passive Elektro-Installationsgerät n repräsentieren. Des Weiteren sind schematisch zwei aktive Elektro-Installationsgeräte 7 bzw. 12 mit daran angeschlossenen Endgeräten 74 bzw. 75 skizziert, wobei das aktive Elektro-Installationsgerät 7 das aktive Elektro-Installationsgerät n+1 und das aktive Elektro-Installationsgerät 12 das aktive Elektro-Installationsgerät m repräsentieren. Es sind beliebig viele weitere passive und / oder aktive Elektro-Installationsgeräte mit jeweils daran angeschlossenen Endgeräten vorhanden. Der Anschluss dieser Elektro-Installationsgeräte, hier 1 bzw. 6 bzw. 7 bzw. 12 an das Datennetzwerk/Bussystem 50 erfolgt über Twisted-Pair-(Duplex)Kabel 24 bzw. 25 bzw. 26 bzw. 27. Die Verschaltung beliebiger N-zu-M-Verbindungen erfolgt über eine Matrix 1.....s (Matrix-Switch), repräsentiert durch die Bezugsziffern 80, 81.

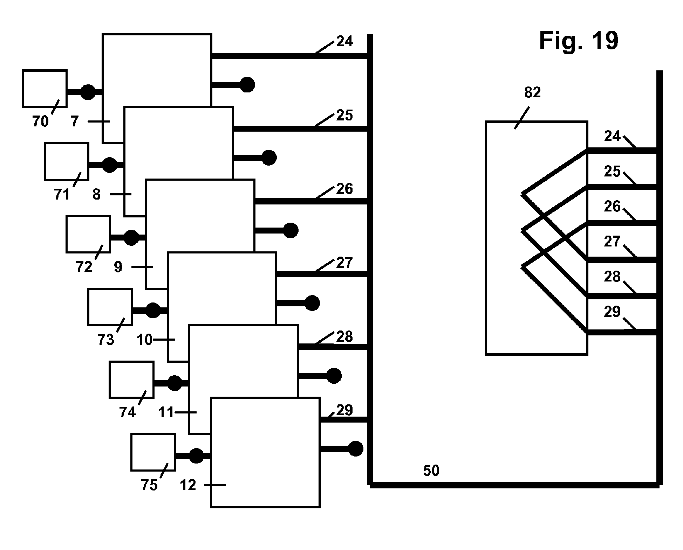

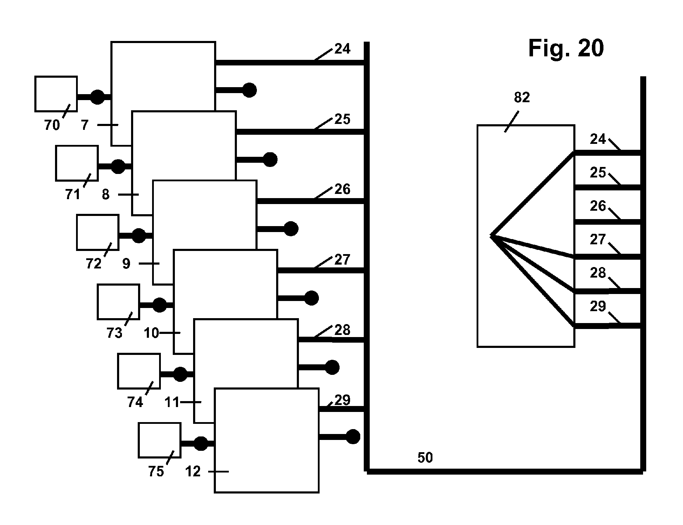

In **Fig. 19** respektive in **Fig. 20** ist eine Matrix-Verbindung mehrerer aktiver Elektro-Installationsgeräte unter Einsatz einer aktiven Matrix gemäß einem ersten respektive einem zweiten Beispiel dargestellt. Es sind sechs Endgeräte 70, 71, 72, 73, 74, 75 zu erkennen, welche über aktive Elektro-Installationsgeräte 7, 8, 9, 10, 11, 12 und Twisted-Pair-(Duplex)Kabel 24, 25, 26, 27, 28, 29 an das Datennetzwerk/Bussystem 50 angeschlossen sind, an welches eine aktive Matrix 82 angeschlossen ist, d. h. je angeschlossenem Endgerät 70 - 75 wird ein Twisted-Pair-(Duplex)Kabel zwischen Elektro-Installationsgerät und Matrix verwendet. Mit anderen Worten besteht das Datennetzwerk/Bussystem 50 beim betrachteten Beispiel aus sechs Duplexkabeln. Am Beispiel eines Audio/Video-Systems wird die Nutzung für verschiedene Verbindungen erklärt:

Die Realisierung von beliebigen Kreuzverschaltungen ermöglicht die Einbindung von mehreren, auch unterschiedlichen Endgeräten 70 - 75 in ein Netzwerk. Ein Audio-/Video-System soll dabei aus mehreren Quellgeräten, wie Blue-Ray-Spieler (= erstes Endgerät), DVD-Recorder (= zweites Endgerät) und PC (= drittes Endgerät), mehreren Projektionsgeräten, wie Fernseher (= viertes Endgerät), Beamer (= fünftes Endgerät) und Monitor (= sechstes Endgerät), sowie einer aktiven Matrix 82 bestehen. Die Quellgeräte (= erstes, zweites und drittes Endgerät 70 - 72) werden beispielsweise mit aktiven Elektro-Installationsgeräten 7 - 9 verbunden, welche jeweils ein aktives Schnittstellenmodul 40 mit HDMI-Anschluss, SCART oder BNC/Cinch/RCA aufweisen. Die Projektionsgeräte (= viertes, fünftes und sechstes Endgerät 73 - 75) werden ebenfalls mit aktiven Elektro-Installationsgeräten 10 - 12 verbunden, welche über jeweils ein aktives Schnittstellenmodul 40 mit HDMI, SCART oder BNC/Cinch/RCA verfügen. Die aktiven Schnittstellenmodule 40 dienen der Medienkonvertierung der unterschiedlichen Signale (HDMI, SCART, BNC, Cinch/RCA) auf das Netzwerk/Bussystem. Die aktive Matrix 82 ermöglicht die beliebige Kreuzverschaltung der Quellgeräte 70 - 72 mit den Projektionsgeräten 73 - 75. So kann beispielsweise der Blue-Ray-Spieler (= erstes Endgerät 70) mit dem Fernseher (= viertes Endgerät 73) und gleichzeitig der DVD-Recorder (= zweites Endgerät 71) mit dem Beamer (= fünftes Endgerät 74) sowie parallel der PC (= drittes Endgerät 72) mit dem Monitor (= sechstes Endgerät 75) in der aktiven Matrix 82 verbunden werden. Diese Kreuzverschaltung ist in **Fig. 19** gezeigt. Die beliebige Positionierung von Quell- und Projektionsgeräten ist durch die Anbindung an andere Elektro-Installationsgeräte flexibel gestaltbar, durch Austausch von anderen Schnittstellenmodulen frei kombinierbar mit anderen und/oder weiteren Geräten und durch die aktive Matrix 82 beliebig verschaltbar.

Durch entsprechende Matrixumstellung (Konfiguration) kann beispielsweise das Audio-/Video-Signal des Blue-Ray-Spielers (= erstes Endgerät 70) auf alle Projektionsgeräte, wie Fernseher, Beamer und Monitor (= viertes, fünftes und sechstes Endgerät 73 - 75) zur gleichen Zeit aufgeschaltet werden. Diese Konfiguration ist in **Fig. 20** gezeigt.

Zusammenfassend werden nachstehend die wesentlichen Vorteile des vorgeschlagenen universellen Elektro-Installationsgeräts angegeben:
- Für die Anbindung von unterschiedlichen Daten-/Benutzerschnittstellen ist nur eine Anschlussdose (= Datendose = universelles Elektro-Installationsgerät) zu verwenden.
- Die Verwendung der Datenschnittstelle kann zu einem beliebigen Zeitpunkt - auch nach dem Einbau - geklärt werden und im Nachhinein einfach und flexibel geändert werden.
- Die Installation erfolgt auf Basis einer standardisierten Kabelinfrastruktur, die eine weite Verbreitung hat, für die es viele passive Komponenten (z.B. Patchfelder) und aktive Komponenten (z.B. Switches) gibt und welche eine kostengünstige, zukunftssichere Installation - im Gegensatz zu Speziallösungen - ermöglicht.
- Eine nachträgliche Datenschnittstellenänderung erfolgt einfach auf Basis des Austausches des Schnittstellenmoduls (passiv oder aktiv). Der Ausbau und (teilweise) Austausch der Datendose ist nicht notwendig. Aufgrund der modularen Ausgestaltung können die Schnittstellenmodule beliebig ausgetauscht werden, ohne dabei die physikalische Verbindung des CAT-(Duplex)/Multifunktions-Kabelanschlusses lösen zu müssen bzw. das Elektro-Installationsgerät ausbauen zu müssen.
- Eine universelle Verteilung der Daten/Signale unterschiedlicher Schnittstellen auf Basis einer Kabeltypinfrastruktur ist gegeben. Eine Verlegung von Kabeln oder der Anschluss von Kabeln an das Elektro-Installationsgerät ist nur einmal notwendig, auch wenn zu einem späteren Zeitpunkt Daten-/Benutzerschnittstellen (d. h. Schnittstellenmodule) gewechselt werden.
- Signal-/Medienkonvertierungen können mit der gleichen Anschlussdose und unterschiedlichen aktiven Schnittstellenmodulen vorgenommen werden. Damit können unterschiedliche Daten-/Benutzerschnittstellen (wie z.B. Lautsprecherklemmen/-buchsen, Cinch/RCA, XLR, RGB-BNC, DVI, SCART, HDMI, EIA-232 bzw. RS-232 D-Sub, Centronics, USB, TAE, ISDN, RJ-Verbindungen usw.) auf das Datennetzwerk umgesetzt und beliebig verteilt werden.
- Endgeräte (z.B. Lautsprecher, Audio-Verstärker und -Endstufen, A/V-Verstärker, Beamer/Projektoren, Fernseher, PC-Systeme, Messgeräte, usw.) lassen sich beliebig im Gebäude positionieren, ohne dabei zusätzliche Kabel zwischen diesen Endgeräten lose oder neu, fest verlegen zu müssen.
- Die aktiven Schnittstellenmodule ermöglichen es, beliebige Endgeräte direkt in das Elektro-Installationsgerät zu integrieren, so dass separate Geräte nicht mehr erforderlich sind, die über störende Leitungen beispielsweise direkt oder über zusätzliche Steckernetzteile an das 230/120 Volt Wechselspannungsnetz und störende Datenleitung beispielsweise an das Ethernet-Datennetzwerk angeschlossen werden müssen. Demzufolge entfällt die Standortwahl, d.h. es entfällt die Problematik, wo ein solches Gerät zweckmäßig unterzubringen ist und wie diese Leitungen zwischen Wanddose und diesem Gerät zu verlegen sind. Aktive Schnittstellen könnten folgende Endgeräte integrieren:
   Audio-/Video-Verstärker,
   WLAN-Access- und Repeater,
   LAN-Switches,
   DSL-Router,
   Lade- und Steuerstationen für USB-Geräte/Mobiltelefone, usw.

Insgesamt ergibt sich eine Kostenminimierung, verbesserte und flexible Handhabung durch den modularen Aufbau: mechanische Busanbindung und Schnittstellenmodule mit interner, generischer Schnittstelle und genormter Netzwerk/Busanbindung.

In den obigen Beispielen dient das Audio/Video-System lediglich zur Veranschaulichung und soll als ein Beispielsystem gesehen werden, d. h. beliebige andere Konstellation mit anderen Endgeräten lassen sich auf die gleiche Art und Weise realisieren.

### Bezugszeichenliste

- 1: universelles, passives Elektro-Installationsgerät
- 2: universelles, passives Elektro-Installationsgerät
- 3: universelles, passives Elektro-Installationsgerät
- 4: universelles, passives Elektro-Installationsgerät
- 5: universelles, passives Elektro-Installationsgerät
- 6: universelles, passives Elektro-Installationsgerät
- 7: universelles, aktives Elektro-Installationsgerät
- 8: universelles, aktives Elektro-Installationsgerät
- 9: universelles, aktives Elektro-Installationsgerät
- 10: universelles, aktives Elektro-Installationsgerät
- 11: universelles, aktives Elektro-Installationsgerät
- 12: universelles, aktives Elektro-Installationsgerät
- -:
- 20: mechanische Busanbindung = erste Teilkomponente
- 21: externer Spannungsanschluss (optional)
- 22: interne, generische, mechanische Schnittstelle
- 23: CAT-Kabelanschluss, CAT-Duplexkabelanschluss, Multfunktionskabelanschluss
- 24: Twisted-Pair-(Duplex)Kabel
- 25: Twisted-Pair-(Duplex)Kabel
- 26: Twisted-Pair-(Duplex)Kabel
- 27: Twisted-Pair-(Duplex)Kabel
- 28: Twisted-Pair-(Duplex)Kabel
- 29: Twisted-Pair-(Duplex)Kabel
- 30: passives Schnittstellenmodul = zweite Teilkomponente
- 31: interne, generische, mechanische Schnittstelle
- 32: Benutzer-/Daten-Schnittstelle, Front-Schnittstellen-Stecker/-Buchse
- 33: positive Lautsprecher-Polklemme des linken Kanals
- 34: negative Lautsprecher-Polklemme des linken Kanals
- 35: positive Lautsprecher-Polklemme des rechten Kanals
- 36: negative Lautsprecher-Polklemme des rechten Kanals
- -:
- 40: aktives Schnittstellenmodul als zweite Teilkomponente
- 41: Netzteil
- 42: Medienkonverter
- -:
- 50: Datennetzwerk/Bussystem
- 60: externe Spannungsversorgung
- -:
- 70: Endgerät
- 71: Endgerät
- 72: Endgerät
- 73: Endgerät
- 74: Endgerät
- 75: Endgerät
- -:
- 80: Matrix, Matrix-Switch
- 81: Matrix, Matrix-Switch
- 82: Aktive Matrix

## Patentansprüche

1. Universelles Elektro-Installationsgerät (1 - 12) für Audio-/Video-Übertragung, Daten- und Telekommunikation mit einer mechanischen Busanbindung (20) als erster Teilkomponente und einem Schnittstellenmodul (30 oder 40) als zweiter Teilkomponente,
- wobei beide Teilkomponenten (20, 30 oder 40) zueinander korrespondierend ausgebildete, interne, generische, mechanische Schnittstellen (22, 31) aufweisen,
- wobei die mechanische Busanbindung (20) einen mit ihrer generischen, mechanischen Schnittstelle (22) verbundenen Kabelanschluss (23) zum Anschluss an ein Datennetzwerk/Bussystem (50) aufweist,
- wobei das Schnittstellenmodul (30 oder 40) eine mit ihrer generischen, mechanischen Schnittstelle (31) verbundene Benutzer-/Daten-Schnittstelle (32) zum Anschluss eines Endgerätes (70 - 75) aufweist,
- so dass beliebige Schnittstellenmodule (30 oder 40) mit unterschiedlich ausgebildeten Benutzer-/Daten-Schnittstellen (32) mit der mechanischen Busanbindung (20) verbindbar sind.

2. Elektro-Installationsgerät (1 - 12) nach Anspruch 1, **gekennzeichnet durch** die Ausbildung des Kabelanschlusses (23) als CAT-Kabelanschluss für den Anschluss mindestens eines Twisted-Pair-Kabels (24 - 29).

3. Elektro-Installationsgerät (1 - 12) nach Anspruch 1, **gekennzeichnet durch** die Ausbildung des Kabelanschlusses (23) als CAT-Duplexkabelanschluss für den Anschluss mindestens eines Twisted-Pair-Duplexkabels.

4. Elektro-Installationsgerät (1 - 12) nach Anspruch 1, **gekennzeichnet durch** die Ausbildung des Kabelanschlusses (23) als Multifunktionskabelanschluss für den Anschluss mindestens eines Multifunktionskabels.

5. Elektro-Installationsgerät (1 - 12) nach einem der vorstehenden Ansprüche, **dadurch gekennzeichnet, dass** die mechanische Busanbindung (20) einen externen Spannungsanschluss (21) aufweist.

6. Elektro-Installationsgerät (1 - 12) nach einem der vorstehenden Ansprüche, **dadurch gekennzeichnet, dass** das Schnittstellenmodul als aktives Schnittstellenmodul (40) ausgebildet ist, welches einen Medienkonverter (42) aufweist.

7. Elektro-Installationsgerät (1 - 12) nach Anspruch 6, **dadurch gekennzeichnet, dass** die Spannungsversorgung über PoE erfolgt.

8. Elektro-Installationsgerät (1 - 12) nach Anspruch 6, **dadurch gekennzeichnet, dass** die Spannungsversorgung über PoL erfolgt.

9. Elektro-Installationsgerät (1 - 12) nach einem der Ansprüche 6 bis 8, **dadurch gekennzeichnet, dass** das Schnittstellenmodul zusätzlich ein Netzteil (41) aufweist.
